# EUROPÄISCHE PATENTSCHRIFT

(11) **EP 3 716 415 B1**
(45) Veröffentlichungstag und Bekanntmachung des Hinweises auf die Patenterteilung: **12.05.2021**
(21) Anmeldenummer: 19165079.5
(22) Anmeldetag: 26.03.2019
(51) Int. Cl.: H01R 39/10, H01R 39/24, H02K 13/00, H01R 39/46, H01R 107/00, H01R 39/64

(54) **SCHLEIFRING SOWIE SCHLEIFRINGEINHEIT MIT EINEM SCHLEIFRING**
SLIP RING AND SLIP RING UNIT WITH A SLIP RING
BAGUE COLLECTRICE AINSI QU'UNITÉ DE BAGUE COLLECTRICE DOTÉE D'UNE BAGUE COLLECTRICE

(43) Veröffentlichungstag der Anmeldung: 30.09.2020
(73) Patentinhaber: LTN Servotechnik GmbH, 83624 Otterfing (DE)
(72) Erfinder: AUTENZELLER, Peter, 83620 Feldkirchen-Westerham (DE); STEINIGANS, Andreas, 83043 Bad Aibling (DE)
(74) Vertreter: Pleyer, Hans Anno

(56) Entgegenhaltungen:
- EP-A1- 3 118 946
- WO-A1-2019/039084
- US-A1- 2009 091 208

## Beschreibung

### BEZEICHNUNG DER ERFINDUNG

Schleifring sowie Schleifringeinheit mit einem Schleifring

### GEBIET DER TECHNIK

Die Erfindung betrifft einen Schleifring gemäß dem Anspruch 1 sowie eine Schleifringeinheit, die einen derartigen Schleifring umfasst, gemäß dem Anspruch 9.

Eine Schleifringeinheit umfasst üblicherweise zwei Bauteilgruppen, nämlich einen Stator und einen Rotor. Der Stator umfasst häufig zumindest eine Bürsteneinheit, wogegen der Rotor meist eine Folge von Schleifringen aufweist. im Betrieb haben Bürsten der Bürsteneinheiten gleitenden Kontakt zu den Mantelseiten der rotierenden Schleifringe. Derartige Schleifringeinheiten werden in vielen technischen Gebieten eingesetzt um elektrische Signale oder elektrische Leistung von einer ortsfesten auf eine sich drehende elektrische Einheit oder in entgegengesetzter Richtung zu übertragen.

### STAND DER TECHNIK

Im Dokument WO2019/039084 A1 wie auch im Dokument US 2009/0091208 A1 ist jeweils ein Schleifring gezeigt, der mehrere Leiterelemente aufweist, wobei jeweils genau ein Leiterelement auf einem Absatz eines Trägerrings montiert ist. Jeder Trägerring weist einseitig einen Steg auf. Die Trägerringe sind so aneinandergereiht, dass jeweils ein Absatz einem Steg eines benachbarten Trägerrings axial gegenüberliegend angeordnet ist.

In der Patentschrift EP 3 118 946 B1 der Anmelderin ist ein Schleifring offenbart, der einen zylindrischen Trägerkörper aus Isoliermaterial aufweist, auf dem Leiterdrähte befestigt sind, die mehreren Spuren zugeordnet werden können.

### ZUSAMMENFASSUNG DER ERFINDUNG

Der Erfindung liegt die Aufgabe zugrunde einen Schleifring beziehungsweise eine Schleifringeinheit zu schaffen, welche insbesondere für die Übertragung hochfrequenter Ströme beziehungsweise Signale geeignet ist und gleichzeitig eine einfache und wirtschaftliche Herstellung erlaubt.

Diese Aufgabe wird erfindungsgemäß durch die Merkmale des Anspruchs 1 beziehungsweise durch die Merkmale des Anspruchs 9 gelöst.

Demnach umfasst der Schleifring einen ersten dielektrischen (beziehungsweise elektrisch isolierenden) Trägerkörper und einen zweiten dielektrischen Trägerkörper. Beide Trägerkörper weisen zumindest eine entlang einer Kreislinie umlaufende Schulter beziehungsweise einen entsprechenden Absatz auf. Der Schleifring umfasst zudem mehrere Leiterelemente, die bezüglich einer Achse ringförmig und geschlossen ausgestaltet sind, wobei zumindest ein Leiterelement auf der Schulter des ersten dielektrischen Trägerkörpers montiert ist. Weiterhin ist zumindest ein Leiterelement auf der Schulter des zweiten dielektrischen Trägerkörpers montiert. Der erste dielektrische Trägerkörper ist in Richtung der Achse versetzt zum zweiten dielektrischen Trägerkörper angeordnet, so dass die Schulter mit dem Leiterelement des ersten dielektrischen Trägerkörpers und die Schulter mit dem Leiterelement des zweiten dielektrischen Trägerkörpers einander axial gegenüber liegend angeordnet sind. Dabei sind die Leiterelemente bezüglich der Achse zentriert platziert, so dass also die Leiterelemente konzentrisch mit axialem Abstand zueinander angeordnet sind. Die Leiterelemente verlaufen insbesondere parallel mit axialem Versatz auf der Schulter in Umfangsrichtung.

Der Begriff Schulter eines Trägerkörpers ist im Folgenden analog wie beispielsweise im Zusammenhang mit der Gestaltung von Schultern an Lagerringen, zu verstehen insbesondere entsprechend der DIN 615 (Schulterkugellager). Somit kann eine Schulter auch als Absatz gesehen werden, wobei hier die Schulter nicht ununterbrochen umlaufend ausgestaltet sein muss, sondern entlang ihres Umfanges auch Unterbrechungen aufweisen kann.

Mit Vorteil sind das zumindest eine Leiterelement des ersten Trägerkörpers und das zumindest eine Leiterelement des zweiten Trägerkörpers elektrisch miteinander verbunden beziehungsweise kurzgeschlossen. Somit weisen diese Leiterelemente das gleiche elektrische Potenzial auf.

Erfindungsgemäß sind am ersten und am zweiten Trägerkörper jeweils zwei Leiterelemente angeordnet. Auch diese zwei Leiterelemente eines Trägerkörpers sind bezüglich der Achse ringförmig und geschlossen ausgestaltet. Dabei sind die zwei Leiterelemente auf der Schulter des ersten dielektrischen Trägerkörpers montiert und die zwei Leiterelemente auf der Schulter des zweiten dielektrischen Trägerkörpers. Die Schulter mit den zwei Leiterelementen des ersten dielektrischen Trägerkörpers und die Schulter mit den zwei Leiterelementen des zweiten dielektrischen Trägerkörpers sind einander axial gegenüber liegend angeordnet.

In weiterer Ausgestaltung der Erfindung weisen die zwei Leiterelemente auf der Schulter des ersten dielektrischen Trägerkörpers unterschiedliche Durchmesser auf. Alternativ oder ergänzend weisen die zwei Leiterelemente auf der Schulter des zweiten dielektrischen Trägerkörpers unterschiedliche Durchmesser auf. Unter dem Begriff Durchmesser ist hier der Ringdurchmesser beziehungsweise der Außendurchmesser der ringförmigen und geschlossenen Leiterelemente zu verstehen, nicht etwa die Differenz zwischen Innen- und Außendurchmesser der Leiterelemente (also nicht die Materialdicke der Leiterelemente).

Vorteilhafterweise sind die beiden Leiterelemente, welche einen kleineren Durchmesser aufweisen in axialer Richtung in einem kleineren Abstand zueinander angeordnet und die beiden Leiterelemente, welche einen größeren Durchmesser aufweisen in axialer Richtung in einem größeren Abstand.

Mit Vorteil sind an zumindest einem der Trägerkörper vier Leiterelemente angeordnet, die ringförmig geschlossen ausgestaltet sind. Dabei sind die vier Leiterelemente bezüglich der Achse zentriert angeordnet, so dass also Leiterelemente konzentrisch mit axialem Abstand zueinander platziert sind. Beispielsweise können die Leiterelemente so angeordnet sein, dass axial zwischen einem Paar von Leiterelementen ein Steg angeordnet ist, welcher dem Trägerkörper zugeordnet ist.

Erfindungsgemäß sind die Leiterelemente aus einem Halbzeug, insbesondere einem Draht, hergestellt, wobei dessen Enden auf Stoß zusammengeschweißt sind. Der Draht kann einen runden beziehungsweise kreisförmigen Querschnitt aufweisen, was gerade für eine Übertragung von hochfrequenten Signalen Vorteile bringen kann. Folglich weisen die Leiterelemente, wenn sie aus einem Draht mit kreisförmigen Querschnitt hergestellt sind, eine im Wesentlichen torusförmige Geometrie auf.

Vorteilhafterweise weist das Halbzeug einen Querschnitt von weniger als 10 mm², insbesondere weniger als 5 mm², insbesondere weniger als 1 mm² auf. Mit Vorteil ist an zumindest einem Leiterelement ein radial nach innen orientierter Anschlussleiter mit einem T-Stoß angeformt, beispielsweise durch eine Schweißverbindung. Dann kann es vorteilhaft sein, wenn der dielektrische Trägerkörper radial orientierte Durchführungen für den Anschlussleiter aufweist.

In weiterer Ausgestaltung der Erfindung sind die Leiterelemente aus einem massiven elektrisch leitfähigen Material hergestellt. Als elektrisch leitfähiges Material kommt insbesondere ein Metall in Betracht, insbesondere ein Edelmetall. Besonders geeignet sind hier massives Silber oder massives Gold oder Legierungen hiervon. Beispielsweise können die Leiterelemente aus einem Material mit einem Massenanteil an Silber von mindestens 80% hergestellt sein. Alternativ können die Leiterelemente eine Edelmetall-haltige Oberflächenschicht aufweisen.

Vorteilhafterweise sind die Trägerkörper im Wesentlichen ringförmig ausgestaltet.

In weiterer Ausgestaltung der Erfindung sind die elektrisch miteinander verbunden Leiterelemente einer Spur zugeordnet, die von Stegen axial begrenzt ist, wobei die Stege den Trägerkörpern zugeordnet sind.

Gemäß einem weiteren Aspekt umfasst die Erfindung eine Schleifringeinheit mit einem Schleifring sowie mit einer Bürsteneinheit, die zumindest eine Bürste umfasst, wobei die Bürste die zwei Leiterelemente des ersten dielektrischen Trägerkörpers an zwei ersten Punkten und die zwei Leiterelemente des zweiten dielektrischen Trägerkörpers an zwei zweiten Punkten berührt. Dabei sind die zwei ersten Punkte oder die zwei zweiten Punkte oder sowohl die zwei ersten Punkte und die zwei zweiten Punkte mit axialem Versatz relativ zueinander angeordnet. Die Bürste kann als ein monolithischer Körper ausgestaltet sein, beispielsweise als ein (beschichteter) Draht oder aber als in einer so genannten Fibre-Brush- oder Vieldraht-Bauweise ausgeführt sein, bei der mehrere zueinander bewegliche Drähte eine Bürste bilden.

Mit Vorteil sind die zwei ersten Punkte und / oder die zwei zweiten Punkte der Schleifringeinheit mit radialem Versatz zueinander angeordnet.

Gemäß einer weiteren Ausgestaltung der Erfindung sind die zwei ersten Punkte und die zwei zweiten Punkte der Schleifringeinheit mit radialem Versatz zueinander angeordnet, wobei diejenigen Punkte, welche radial weiter innen liegen mit einem ersten axialen Abstand zueinander angeordnet sind und diejenigen Punkte, welche radial weiter außen liegen mit einem zweiten axialen Abstand zueinander angeordnet sind. Dabei ist der erste axiale Abstand kleiner als der zweite axiale Abstand.

Mit Vorteil weist die Bürste der Schleifringeinheit einen kreisförmigen Querschnitt auf. Zudem kann die Bürste aus einem metallhaltigen Material hergestellt sein. Insbesondere aus einem nicht kohlehaltigen Material.

Gemäß einer bevorzugten Variante der Schleifringeinheit weist die Bürste eine Edelmetall-haltige, eine beispielsweise Gold-haltige, Oberfläche auf.

Die Schleifringeinheit kann insbesondere so aufgebaut sein, dass ein Leiterelement von der Bürste zweifach kontaktierbar ist. In diesem Zusammenhang weist die Bürste mit Vorteil zwei freie Enden auf, die jeweils an ein und demselben Leiterelement anliegen mit in Umfangsrichtung vorliegendem Versatz. Diese Anordnung kann auch als Doppelbürste bezeichnet werden, die insbesondere eine Redundanz der Strom- beziehungsweise Datenübertragung mit sich bringt.

In weiterer Ausgestaltung der Erfindung sind insbesondere diejenigen Leiterelemente, welche eine Spur bilden im ersten Abschnitt axial von Stegen umgeben, die zur Begrenzung der axialen Bewegbarkeit der Bürste einen größeren Außendurchmesser aufweisen als die Leiterelemente.

Die Schleifringeinheit kann zur Übertragung von elektrischer Leistung und / oder von elektrischen Signalen, also zur Übertragung von Information verwendet werden. Durch den erfindungsgemäßen Schleifring beziehungsweise durch die erfindungsgemäße Schleifringeinheit können insbesondere auf vergleichsweise einfache Weise hochfrequente Signale übertragen werden. Insbesondere erweist sich die spezielle Bauweise des Schleifrings vorteilhaft im Hinblick auf eine reduzierte elektrische Kapazität.

Vorteilhafte Ausbildungen der Erfindung entnimmt man den abhängigen Ansprüchen.

Weitere Einzelheiten und Vorteile des erfindungsgemäßen Schleifrings beziehungsweise der erfindungsgemäßen Schleifringeinheit ergeben sich aus der nachfolgenden Beschreibung eines Ausführungsbeispiels anhand der beiliegenden Figuren.

### KURZE BESCHREIBUNG DER ZEICHNUNGEN

### Es zeigen die

- Figur 1: eine perspektivische Ansicht einer Schleifringeinheit,
- Figur 2: eine Seitenansicht eines Trägerkörpers,
- Figur 3a: eine Seitenansicht eines ersten Leiterelementes,
- Figur 3b: eine Seitenansicht eines zweiten Leiterelementes,
- Figur 4: eine Seitenansicht des Trägerkörpers mit montiertem ersten Leiterelement und montiertem zweiten Leiterelement,
- Figur 5: einen Teillängsschnitt durch die Trägerkörper mit den Leiterelementen,
- Figur 6: einen Teillängsschnitt durch eine Schleifringeinheit.

### BESCHREIBUNG DER AUSFÜHRUNGSFORMEN

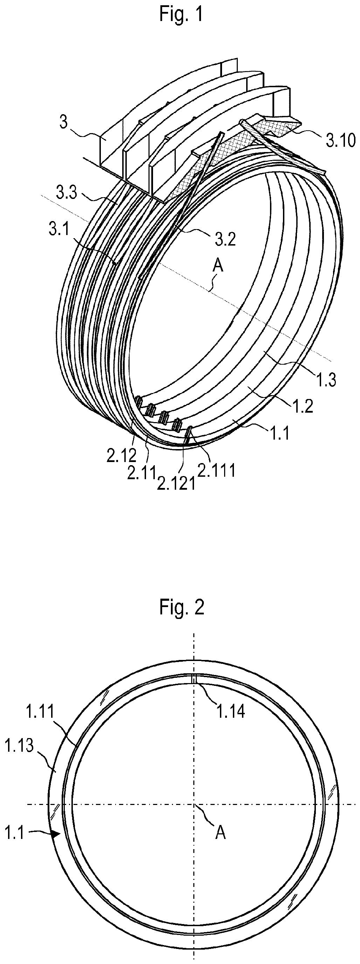

In der Figur 1 ist eine Schleifringeinheit gezeigt, welche mehrere dielektrische und im Wesentlichen ringförmig ausgestaltete Trägerkörper 1.1, 1.2, 1.3 umfasst, auf denen Leiterelemente 2.11, 2.12, 2.13, 2,14, 2.21, 2.22, 2.23, 2.24, 2.31, 2.32 (in der Figur 1 sind der Übersichtlichkeit halber nicht alle Leiterelemente mit Bezugszeichen versehen) montiert sind. Weiterhin umfasst die Schleifringeinheit eine Bürsteneinheit 3, die mehrere Bürsten 3.1, 3.2, 3.3 aufweist, die an einem Bürstenhalter 3.10 befestigt sind. In der Figur 1 sind im Übrigen keine Kabel gezeigt, die üblicherweise einerseits in den durch die aneinandergereihten Trägerkörper 1.1, 1.2, 1.3 gebildeten innen liegenden Hohlraum angeordnet sind und andererseits an der Bürsteneinheit 3 angeschlossen sind.

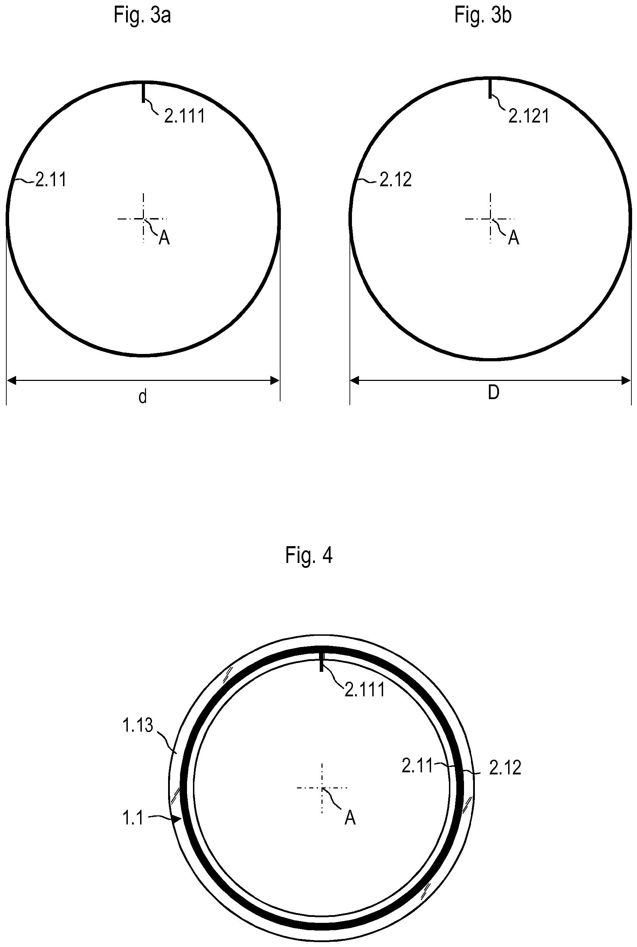

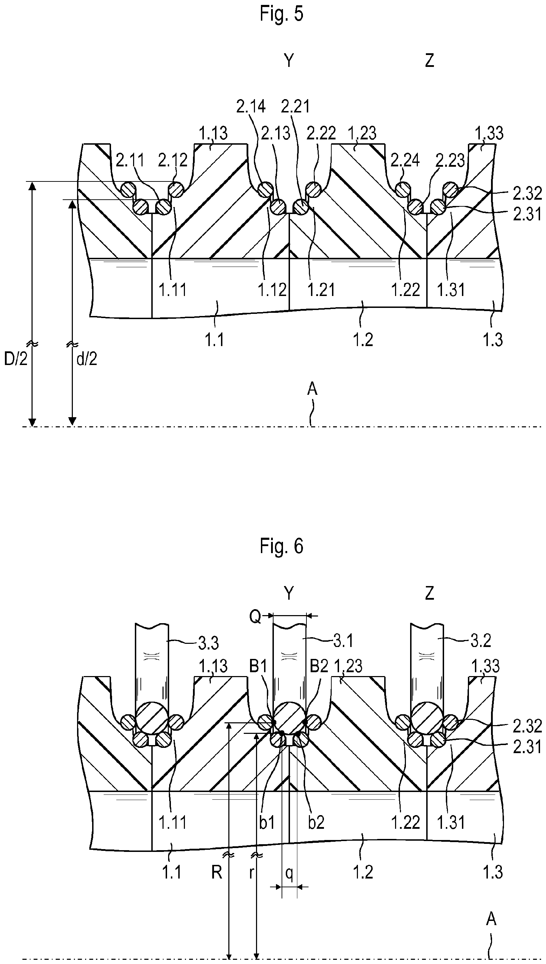

Die Trägerkörper 1.1, 1.2, 1.3 wie beispielsweise in den Figuren 2 oder 4 dargestellt, sind im vorgestellten Ausführungsbeispiel aus Kunststoff und können etwa durch einen Drehprozess oder einen Spritzgussprozess hergestellt werden. Jeder Trägerkörper 1.1, 1.2, 1.3 weist gemäß der Figur 5 jeweils eine erste Schulter 1.11, 1.21, 1.31 und eine jeweils eine zweite Schulter 1.12, 1.22, 1.32 auf. Zwischen jeder ersten Schulter 1.11, 1.21, 1.31 und jeder zweiten Schulter 1.12, 1.22, 1.32 weisen die Trägerkörper 1.1, 1.2, 1.3 jeweils einen Steg 1.13, 1.23, 1.33 auf. Sowohl die ersten Schultern 1.11, 1.21, 1.31 als auch die zweite Schulter 1.12, 1.22, 1.32 weisen umlaufende Auflageflächen auf, die im vorgestellten Ausführungsbeispiel konkav ausgestaltet sind. Weiterhin weist jeder Trägerkörper 1.1, 1.2, 1.3 eine radial nach innen verlaufende Durchführung 1.14 beziehungsweise einen radial verlaufenden Kanal auf.

Zur Herstellung der Leiterelemente 2.11, 2.12, 2.13, 2,14, 2.21, 2.22, 2.23, 2.24, 2.31, 2.32 wird hier ein massiver Draht aus Silber mit einem Kreisquerschnitt als Ausgangsmaterial herangezogen. Dieser Draht, der als aufgewickeltes Halbzeug zur Verfügung gestellt werden kann, wird abgelängt, sodass Stücke mit einer ersten Länge und Stücke mit einer zweiten Länge vorliegen. Diese Stücke des Drahts werden gebogen und an den Enden auf Stoß zusammengeschweißt beziehungsweise mit einer Stoßschweißnaht zum Beispiel mit Hilfe eines Lasers gefügt, so dass erste Ringe mit einem kleineren Durchmesser d und zweite Ringe mit einem größeren Durchmesser D entstehen. Danach werden von dem Draht-Halbzeug vergleichsweise kurze Stücke abgeschnitten, die an die Ringe geschweißt werden und später als Anschlussleiter 2.111, 2.121 dienen. Auf diese Weise werden Leiterelemente 2.11, 2.12, 2.13, 2,14, 2.21, 2.22, 2.23, 2.24, 2.31, 2.32 gefertigt, von denen beispielhaft zwei (die Leiterelemente 2.11,2.12) in der Figur 3 gezeigt sind. Wie aus dieser Figur ersichtlich ist, verlaufen die Anschlussleiter 2.111, 2.121, die jeweils mit einem T-Stoß an den Ring geschweißt sind, radial nach innen. Auf die oben beschriebene Weise werden alle Leiterelemente 2.11, 2.12, 2.13, 2,14, 2.21, 2.22, 2.23, 2.24, 2.31, 2.32 hergestellt, wobei die Leiterelemente 2.11, 2.13, 2.21, 2.23, 2.31 einen kleineren Durchmesser d aufweisen als die Leiterelemente 2.12, 2,14, 2.22, 2.24, 2.32 mit dem größeren Durchmesser D.

Im Zuge der weiteren Montage der Schleifringeinheit werden zunächst die Leiterelemente 2.12, 2,14, 2.22, 2.24, 2.32 mit dem größeren Durchmesser D auf die großdurchmessrigen umlaufenden konkaven Auflageflächen der Trägerkörper 1.1, 1.2, 1.3 aufgezogen. Danach werden auf die gleiche Weise die Leiterelemente 2.11, 2.13, 2.21, 2.23 mit dem kleineren Durchmesser d auf den dafür vorgesehenen umlaufenden konkaven Auflageflächen montiert. Die Auflageflächen beziehungsweise die Schultern 1.11, 1.21, 1.31 und die Leiterelemente 2.11, 2.12, 2.13, 2,14, 2.21, 2.22, 2.23, 2.24, 2.31, 2.32 sind so ausgebildet, dass die Leiterelemente 2.11, 2.12, 2.13, 2,14, 2.21, 2.22, 2.23, 2.24, 2.31, 2.32 unter mechanischer Spannung gespannt am Trägerkörper 1.1, 1.2, 1.3 befestigt sind. Die Leiterelemente 2.11, 2.12, 2.13, 2,14, 2.21, 2.22, 2.23, 2.24, 2.31, 2.32 sind so auf den Trägerkörpern 1.1, 1.2, 1.3 angeordnet, dass die Anschlüsse 2.111, 2.121 in den Durchführungen 1.14 zu liegen kommen.

Danach werden die Trägerkörper 1.1, 1.2, 1.3 mit den Leiterelementen 2.11, 2.12, 2.13, 2,14, 2.21, 2.22, 2.23, 2.24, 2.31, 2.32 axial aneinandergereiht, so dass sich die Trägerkörper 1.1, 1.2, 1.3 an ihren axialen Stirnflächen berühren. Im Anschluss daran werden in den durch die aneinandergereihten Trägerkörper 1.1, 1.2, 1.3 gebildeten innen liegenden Hohlraum Kabel angeordnet, deren Enden mit den Anschlüssen 2.111, 2.121 elektrisch verbunden werden.

Die Leiterelemente 2.13, 2.14, 2.21, 2,22 können einer ersten Spur Y und die Leiterelemente 2.23, 2.24 2.31, 2.32 einer zweiten Spur Z zugeordnet werden (Figur 5). Die erste Spur Y mit den Leiterelementen 2.13, 2.14, 2.21, 2,22 ist gegenüber einer benachbarten zweiten Spur Z durch den Steg 1.23 abgetrennt. Die Leiterelemente 2.13, 2.14, 2.21, 2,22 der ersten Spur Y sind elektrisch miteinander verbunden und weisen also das gleiche elektrische Potenzial auf. Ebenso sind die Leiterelemente 2.23, 2.24 2.31, 2.32 der zweiten Spur Z miteinander verbunden und weisen das gleiche elektrische Potenzial auf.

In der Figur 6 ist ein Teillängsschnitt einer Schleifringeinheit gezeigt, welche die Trägerkörper 1.1, 1.2, 1.3, die Leiterelemente 2.11, 2.12, 2.13, 2,14, 2.21, 2.22, 2.23, 2.24, 2.31, 2.32 und Bürsten 3.1, 3.2, 3.3, die der Bürsteneinheit 3 zugeordnet sind, umfasst. Im vorgestellten Ausführungsbeispiel sind die Bürsten 3.1, 3.2, 3.3 jeweils als Drähte insbesondere mit rundem beziehungsweise kreisförmigem Querschnitt ausgestaltet, die vorzugsweise mit Gold beschichtet sind. Die erste Bürste 3.1 gehört zur ersten Spur Y und die zweite Bürste 3.2 zur zweiten Spur Z.

Anhand der Figur 6 kann die geometrische Ausgestaltung der Schleifringeinheit am Beispiel der ersten Spur Y beschrieben werden, wobei im vorgestellten Ausführungsbeispiel die zweite Spur Z wie auch alle anderen Spuren analog ausgestaltet sind. Demnach berührt die Bürste 3.1 jedes Leiterelement 2.13, 2,14, 2.21, 2.22 der ersten Spur Y (Figur 5) an jeweils zumindest einem Punkt B1, b1, B2, b2. Die Bürste 3.1 berührt die zwei Leiterelemente 2.13, 2.14 des ersten dielektrischen Trägerkörpers 1.1 an zwei ersten Punkten b1, B1. Gleichermaßen berührt die Bürste 3.1 die zwei Leiterelemente 2.21, 2.22 des zweiten dielektrischen Trägerkörpers 1.2 an zwei zweiten Punkten b2, B2.

Die zwei ersten Punkte b1, B1 sind mit einem radialen Versatz zueinander angeordnet, wobei ein Punkt b1 mit einem kleinerem Abstand r zur Achse A angeordnet ist und der andere Punkt B1 mit einem größerem Abstand R zur Achse A. Der radiale Versatz zwischen den ersten Punkten b1, B1 ist dann gemäß der Figur 6 die Differenz der beiden Abstände R, r (radialer Versatz = R-r). Die gleiche Betrachtung gilt auch für die die zwei zweiten Punkte b2, B2. Somit liegen im vorgestellten Ausführungsbeispiel in einer Spur Y Punkte b1, b2 vor, die einen kleineren Abstand r zur Achse A haben (radial weiter innen liegend) und Punkte B1, B2, die einen größeren Abstand R zur Achse A haben (radial weiter außen liegend), so dass gilt r < R. Die radial weiter innen liegenden Punkte b1, b2 haben hier im Übrigen eine gleich großen Abstand r zur Achse A. Ebenso haben die radial weiter außen liegenden Punkte B1, B2 einen gleich großen Abstand R zur Achse A.

Zudem sind die radial weiter innen liegenden Punkte b1, b2 mit einem ersten axialen Abstand q zueinander angeordnet und die Punkte B1, B2, welche radial weiter außen liegen mit einem zweiten axialen Abstand Q zueinander angeordnet sind. Dabei gilt, dass, der erste axiale Abstand q kleiner ist als der zweite axiale Abstand Q (q < Q).

Außerdem sind die zwei ersten Punkte b1, B1 mit einem axialem Versatz zueinander angeordnet (axialer Versatz = ½·[Q-q]). Gleiches gilt auch für die zwei zweiten Punkte b2, B2.

Verbindet man die zwei ersten Punkte b1, B1 mit einer virtuellen Gerade und ebenso die zwei zweiten Punkte b2, B2, so sind diese Geraden gemäß einer V-Form angeordnet, wobei sich das betreffende V radial nach außen hin öffnet.

Die Schleifringeinheit ist so ausgebildet, dass bei einer relativen Drehung der Trägerkörper 1.1, 1.2, 1.3 beziehungsweise der Leiterelemente 2.11, 2.12, 2.13, 2,14, 2.21, 2.22, 2.23, 2.24, 2.31, 2.32 um eine Achse A eine Stromübertragung, insbesondere eine Signalübertragung zwischen den Leiterelementen 2.11, 2.12, 2.13, 2,14, 2.21, 2.22, 2.23, 2.24, 2.31, 2.32 und den Bürsten 3.1, 3.2, 3.3 möglich ist. Häufig ist die Bürsteneinheit 3 einem Stator zugeordnet und die Leiterelemente 2.11, 2.12, 2.13, 2, 14, 2.21, 2.22, 2.23, 2.24, 2.31, 2.32 mit den Trägerelementen 1.1, 1.2, 1.3 einem Rotor. Die spezielle Anordnung der Leiterelemente 2.11, 2.12, 2.13, 2,14, 2.21, 2.22, 2.23, 2.24, 2.31, 2.32 hat zur Folge, dass die Bürsten 3.1, 3.2, 3.3 durch die Leiterelemente 2.11, 2.12, 2.13, 2,14, 2.21, 2.22, 2.23, 2.24, 2.31, 2.32 gut geführt werden und stets eine hochwertige schleifende Kontaktierung und damit eine zuverlässige Signalübertragung erreichbar ist. Zudem wird durch die Stege 1.13, 1.23, 1.33 eine äußerste Begrenzung der Maximal-Bewegung der Bürsten 3.1, 3.2, 3.3 in Axialrichtung sichergestellt.

Im vorgestellten Ausführungsbeispiel wird ein Leiterelement 2.11, 2.12, 2.13, 2,14, 2.21, 2.22, 2.23, 2.24, 2.31, 2.32 zweimal von einer Bürste kontaktiert (Doppelbürsten-Bauweise). Die Enden sind im Rahmen der Elastizität der Bürsten 3.1, 3.2, 3.3 radial beweglich.

Die im vorgestellten Ausführungsbeispiel beschriebene Schleifringeinheit ist insbesondere zur Übertragung von hochfrequenten Signalen geeignet. Insbesondere erweist sich die spezielle Bauweise des Schleifrings vorteilhaft im Hinblick auf eine reduzierte elektrische Kapazität.

## Patentansprüche

1. Schleifring umfassend
einen ersten dielektrischen Trägerkörper (1.1) und einen zweiten dielektrischen Trägerkörper (1.2), wobei jeder der Trägerkörper (1.1, 1.2) zumindest eine entlang einer Kreislinie umlaufende Schulter (1.12, 1.21) aufweist, wobei
am ersten und am zweiten Trägerkörper (1.1, 1.2) jeweils zwei Leiterelemente (2.13, 2.14; 2.21, 2.22), die bezüglich der Achse (A) ringförmig und geschlossen ausgestaltet sind, angeordnet sind, so dass zwei Leiterelemente (2.13, 2.14) auf der Schulter (1.12) des ersten dielektrischen Trägerkörpers (1.1) montiert sind und
zwei Leiterelemente (2.21, 2.22) auf der Schulter (1.21) des zweiten dielektrischen Trägerkörpers (1.2) montiert sind, wobei
der erste dielektrische Trägerkörper (1.1) in Richtung der Achse (A) versetzt zum zweiten dielektrischen Trägerkörper (1.2) angeordnet ist, so dass
die Schulter (1.12) mit den zwei Leiterelementen (2.13, 2.14) des ersten dielektrischen Trägerkörpers (1.1) und
die Schulter (1.21) mit den zwei Leiterelementen (2.21, 2.22) des zweiten dielektrischen Trägerkörpers (1.2)
einander axial gegenüber liegend angeordnet sind, wobei
die Leiterelemente (2.11, 2.12, 2.13, 2.14, 2.21, 2.22, 2.23, 2.24, 2.31, 2.32) aus einem Halbzeug, insbesondere einem Draht, hergestellt sind, wobei dessen Enden auf Stoß zusammengeschweißt sind.

2. Schleifring gemäß dem Anspruch 1, wobei die Leiterelemente (2.13, 2.14) des ersten dielektrischen Trägerkörpers (1.1) und die Leiterelemente (2.21, 2.22) des zweiten dielektrischen Trägerkörpers (1.2) elektrisch miteinander verbunden sind.

3. Schleifring gemäß dem Anspruch 1 oder 2, wobei die zwei Leiterelemente (2.13, 2.14) auf der Schulter (1.12) des ersten dielektrischen Trägerkörpers (1.1) unterschiedliche Durchmesser (D, d) aufweisen und / oder die zwei Leiterelemente (2.21, 2.22) auf der Schulter (1.21) des zweiten dielektrischen Trägerkörpers (1.2) unterschiedliche Durchmesser (D, d) aufweisen.

4. Schleifring gemäß einem der vorhergehenden Ansprüche, wobei die zwei Leiterelemente (2.13, 2.14) auf der Schulter (1.12) des ersten dielektrischen Trägerkörpers (1.1) unterschiedliche Durchmesser (D, d) aufweisen und die zwei Leiterelemente (2.21, 2.22) auf der Schulter (1.21) des zweiten dielektrischen Trägerkörpers (1.2) unterschiedliche Durchmesser (D, d) aufweisen, wobei die beiden Leiterelemente (2.13, 2.21), welche einen kleineren Durchmesser (d) aufweisen in axialer Richtung in einem kleineren Abstand und die beiden Leiterelemente (2.13, 2.21), welche einen größeren Durchmesser (D) aufweisen in axialer Richtung in einem größeren Abstand angeordnet sind.

5. Schleifring gemäß einem der vorhergehenden Ansprüche, wobei an einem Trägerkörper (1.1, 1.2, 1.3) vier Leiterelemente (2.11, 2.12, 2.13, 2.14, 2.21, 2.22, 2.23, 2.24, 2.31, 2.32), die ringförmig geschlossen ausgestaltet sind, angeordnet sind.

6. Schleifring gemäß einem der vorhergehenden Ansprüche, wobei an zumindest einem Leiterelement (2.11, 2.12, 2.13, 2.14, 2.21, 2.22, 2.23, 2.24, 2.31, 2.32) ein radial nach innen orientierter Anschlussleiter (2.111, 2.121, 2.211, 2.221, 2.311, 2.321, 2.411, 2.421) mit einem T-Stoß angeformt ist.

7. Schleifring gemäß einem der vorhergehenden Ansprüche, wobei die Leiterelemente (2.11, 2.12, 2.13, 2.14, 2.21, 2.22, 2.23, 2.24, 2.31, 2.32) aus einem massiven elektrisch leitfähigen Material hergestellt sind.

8. Schleifring gemäß dem Anspruch 7, wobei die Leiterelemente (2.11, 2.12, 2.13, 2.14, 2.21, 2.22, 2.23, 2.24, 2.31, 2.32) aus einem Material mit einem Massenanteil an Silber von mindestens 80% hergestellt sind.

9. Schleifringeinheit umfassend einen Schleifring gemäß einem der Ansprüche 2 bis 8 sowie eine Bürsteneinheit (3) mit einer Bürste (3.1, 3.2, 3.3), wobei die Bürste (3.1, 3.2, 3.3) die zwei Leiterelemente (2.13, 2.14) des ersten dielektrischen Trägerkörpers (1.1) an zwei ersten Punkten (b1, B1) berührt und die zwei Leiterelemente (2.21, 2.22) des zweiten dielektrischen Trägerkörpers (1.2) an zwei zweiten Punkten (b2, B2) berührt, wobei die zwei ersten Punkte (b1, B1) und / oder die zwei zweiten Punkte (b2, B2) mit axialem Versatz zueinander angeordnet sind.

10. Schleifringeinheit gemäß dem Anspruch 9, wobei die zwei ersten Punkte (b1, B1) und / oder die zwei zweiten Punkte (b2, B2) mit radialem Versatz zueinander angeordnet sind.

11. Schleifringeinheit gemäß dem Anspruch 10, wobei die zwei ersten Punkte (b1, B1) und die zwei zweiten Punkte (b2, B2) mit radialem Versatz zueinander angeordnet sind, wobei
diejenigen Punkte (b1, b2), welche radial weiter innen liegen mit einem ersten axialen Abstand (q) zueinander angeordnet sind und di
ejenigen Punkte (B1, B2), welche radial weiter außen liegen mit einem zweiten axialen Abstand (Q) zueinander angeordnet sind, wobei der erste axiale Abstand (q) kleiner ist als der zweite axiale Abstand (Q).

12. Schleifringeinheit gemäß einem der Ansprüche 9 bis 11, wobei die Bürste (3.1, 3.2., 3.3) einen kreisförmigen Querschnitt aufweist.

13. Schleifringeinheit gemäß einem der Ansprüche 9 bis 12, wobei die Bürste (3.1, 3.2., 3.3) aus einem metallhaltigen Material hergestellt ist.

## Claims

1. Slip ring comprising a first dielectric carrier body (1.1) and a second dielectric carrier body (1.2), wherein each of the carrier bodies (1.1, 1.2) has at least one shoulder (1.12, 1.21) which runs along a circular line, wherein in each case two conductor elements (2.13, 2.14; 2.21, 2.22) which are configured in an annular and closed manner with respect to the axis (A) are arranged on the first and on the second carrier body (1.1, 1.2), so that two conductor elements (2.13, 2.14) are mounted on the shoulder (1.12) of the first dielectric carrier body (1.1) and two conductor elements (2.21, 2.22) are mounted on the shoulder (1.21) of the second dielectric carrier body (1.2), wherein the first dielectric carrier body (1.1) is arranged offset in relation to the second dielectric carrier body (1.2) in the direction of the axis (A), so that the shoulder (1.12) with the two conductor elements (2.13, 2.14) of the first dielectric carrier body (1.1) and the shoulder (1.21) with the two conductor elements (2.21, 2.22) of the second dielectric carrier body (1.2) are arranged axially opposite one another, wherein the conductor elements (2.11, 2.12, 2.13, 2.14, 2.21, 2.22, 2.23, 2.24, 2.31, 2.32) are produced from a semi-finished product, in particular a wire, wherein its ends are butt-welded together.

2. Slip ring according to Claim 1, wherein the conductor elements (2.13, 2.14) of the first dielectric carrier body (1.1) and the conductor elements (2.21, 2.22) of the second dielectric carrier body (1.2) are electrically connected to one another.

3. Slip ring according to Claim 1 or 2, wherein the two conductor elements (2.13, 2.14) on the shoulder (1.12) of the first dielectric carrier body (1.1) have different diameters (D, d) and/or the two conductor elements (2.21, 2.22) on the shoulder (1.21) of the second dielectric carrier body (1.2) have different diameters (D, d).

4. Slip ring according to one of the preceding claims, wherein the two conductor elements (2.13, 2.14) on the shoulder (1.12) of the first dielectric carrier body (1.1) have different diameters (D, d) and the two conductor elements (2.21, 2.22) on the shoulder (1.21) of the second dielectric carrier body (1.2) have different diameters (D, d), wherein the two conductor elements (2.13, 2.21) which have a smaller diameter (d) are arranged at a smaller distance in the axial direction and the two conductor elements (2.13, 2.21) which have a larger diameter (D) are arranged at a greater distance in the axial direction.

5. Slip ring according to one of the preceding claims, wherein four conductor elements (2.11, 2.12, 2.13, 2.14, 2.21, 2.22, 2.23, 2.24, 2.31, 2.32), which are configured in an annularly closed manner, are arranged on a carrier body (1.1, 1.2, 1.3).

6. Slip ring according to one of the preceding claims, wherein a connection conductor (2.111, 2.121, 2.211, 2.221, 2.311, 2.321, 2.411, 2.421) which is oriented radially towards the inside is integrally formed on at least one conductor element (2.11, 2.12, 2.13, 2.14, 2.21, 2.22, 2.23, 2.24, 2.31, 2.32) with a T-joint.

7. Slip ring according to one of the preceding claims, wherein the conductor elements (2.11, 2.12, 2.13, 2.14, 2.21, 2.22, 2.23, 2.24, 2.31, 2.32) are produced from a solid electrically conductive material.

8. Slip ring according to Claim 7, wherein the conductor elements (2.11, 2.12, 2.13; 2.14, 2.21, 2.22, 2.23, 2.24, 2.31, 2.32) are produced from a material with a mass fraction of silver of at least 80%.

9. Slip ring unit comprising a slip ring according to one of Claims 2 to 8 and a brush unit (3) with a brush (3.1, 3.2, 3.3), wherein the brush (3.1, 3.2, 3.3) touches the two conductor elements (2.13, 2.14) of the first dielectric carrier body (1.1) at two first points (b1, B1) and the two conductor elements (2.21, 2.22) of the second dielectric carrier body (1.2) at two second points (b2, B2), wherein the two first points (b1, B1) and/or the two second points (b2, B2) are arranged with an axial offset in relation to one another.

10. Slip ring unit according to Claim 9, wherein the two first points (b1, B1) and/or the two second points (b2, B2) are arranged with a radial offset in relation to one another.

11. Slip ring unit according to Claim 10, wherein the two first points (b1, B1) and the two second points (b2, B2) are arranged with a radial offset in relation to one another, wherein those points (b1, b2) which are situated radially further on the inside are arranged at a first axial distance (q) from one another and those points (B1, B2) which are situated radially further on the outside are arranged at a second axial distance (Q) from one another, wherein the first axial distance (q) is smaller than the second axial distance (Q).

12. Slip ring unit according to one of Claims 9 to 11, wherein the brush (3.1, 3.2, 3.3) has a circular cross section.

13. Slip ring unit according to one of Claims 9 to 12, wherein the brush (3.1, 3.2, 3.3) is produced from a metal-containing material.

## Revendications

1. Bague collectrice comprenant
un premier corps de support diélectrique (1.1) et un deuxième corps de support diélectrique (1.2), chacun des corps de support (1.1, 1.2) comportant au moins un épaulement (1.12, 1.21) s'étendant circonférentiellement le long d'une ligne circulaire, deux éléments conducteurs (2.13, 2.14 ; 2.21, 2.22), qui sont conçus pour être fermés de manière annulaire par rapport à l'axe (A), étant disposés sur le premier et le deuxième corps de support (1.1, 1.2) de sorte que deux éléments conducteurs (2.13, 2.14) soient montés sur l'épaulement (1.12) du premier corps de support diélectrique (1.1) et deux éléments conducteurs (2.21, 2.22) soient montés sur l'épaulement (1.21) du deuxième corps de support diélectrique (1.2), le premier corps de support diélectrique (1.1) étant décalé par rapport au deuxième corps de support diélectrique (1.2) dans la direction de l'axe (A) de sorte que l'épaulement (1.12) pourvu des deux éléments conducteurs (2.13, 2.14) du premier corps de support diélectrique (1.1) et l'épaulement (1.21) pourvu des deux éléments conducteurs (2.21, 2.22) du deuxième corps de support diélectrique (1.2) soient disposés axialement en face l'un de l'autre, les éléments conducteurs (2.11, 2.12, 2.13, 2.14, 2.21, 2.22, 2.23, 2.24, 2.31, 2.32) étant réalisés à partir d'un produit semi-fini, en particulier d'un fil métallique, les extrémités de celui-ci étant soudées bout à bout.

2. Bague collectrice selon la revendication 1, les éléments conducteurs (2.13, 2.14) du premier corps de support diélectrique (1.1) et les éléments conducteurs (2.21, 2.22) du deuxième corps de support diélectrique (1.2) étant reliés électriquement les uns aux autres.

3. Bague collectrice selon la revendication 1 ou 2, les deux éléments conducteurs (2.13, 2.14) sur l'épaulement (1.12) du premier corps de support diélectrique (1.1) ayant des diamètres différents (D, d) et/ou les deux éléments conducteurs (2.21. 2.22) sur l'épaulement (1.21) du deuxième corps de support diélectrique (1.2) ayant des diamètres différents (D, d) .

4. Bague collectrice selon l'une des revendications précédentes, les deux éléments conducteurs (2.13, 2.14) sur l'épaulement (1.12) du premier corps de support diélectrique (1.1) ayant des diamètres différents (D, d) et les deux éléments conducteurs (2.21, 2.22) sur l'épaulement (1.21) du deuxième corps de support diélectrique (1.2) ayant des diamètres différents (D, d), les deux éléments conducteurs (2.13, 2.21), qui ont un diamètre (d) plus petit, étant disposés à une distance plus petite dans la direction axiale et les deux éléments conducteurs (2.13, 2.21), qui ont un diamètre (D) plus grand, étant disposés à une plus grande distance dans la direction axiale.

5. Bague collectrice selon l'une des revendications précédentes, quatre éléments conducteurs (2.11, 2.12, 2.13, 2.14, 2.21, 2.22, 2.23, 2.24, 2.31, 2.32), qui sont conçus pour être fermés de manière annulaire, étant disposés sur un corps de support (1.1, 1.2, 1.3).

6. Bague collectrice selon l'une des revendications précédentes, un conducteur de connexion (2.111, 2.121, 2.211, 2.221, 2.311, 2.321, 2.411, 2.421) orienté radialement vers l'intérieur étant formé avec un joint en T au niveau d'au moins un élément conducteur (2.11, 2.12, 2.13, 2.14, 2.21, 2.22, 2.23, 2.24, 2.31, 2.32).

7. Bague collectrice selon l'une des revendications précédentes, les éléments conducteurs (2.11, 2.12, 2.13, 2.14, 2.21, 2.22, 2.23, 2.24, 2.31, 2.32) étant en un matériau plein électriquement conducteur.

8. Bague collectrice selon la revendication 7, les éléments conducteurs (2.11, 2.12, 2.13 ; 2.14, 2.21, 2.22, 2.23, 2.24, 2.31, 2.32) étant en un matériau comportant un pourcentage en masse d'argent d'au moins 80 %.

9. Unité à bague collectrice comprenant une bague collectrice selon l'une des revendications 2 à 8 et une unité à brosse (3) pourvue d'une brosse (3.1, 3.2, 3.3), la brosse (3.1, 3.2, 3.3) touchant les deux éléments conducteurs (2.13, 2.14) du premier corps de support diélectrique (1.1) en deux premiers points (b1 ; B1) et touchant les deux éléments conducteurs (2.21, 2.22) du deuxième corps de support diélectrique (1.2) en deux deuxièmes points (b2, B2), les deux premiers points (b1, B1) et/ou les deux deuxièmes points (b2, B2) étant disposés avec un décalage axial l'un par rapport à l'autre.

10. Unité à bague collectrices selon la revendication 9, les deux premiers points (b1, B1) et/ou les deux deuxièmes points (b2, B2) étant disposés avec un décalage radial l'un par rapport à l'autre.

11. Unité à bague collectrice selon la revendication 10, les deux premiers points (b1, B1) et les deux deuxièmes points (b2, B2) étant disposés avec un décalage radial l'un par rapport à l'autre, les points (b1, B2) qui se trouvent radialement plus vers l'intérieur étant disposés à une première distance axiale (q) l'un de l'autre et les points (B1, B2) qui se trouvent radialement plus vers l'extérieur étant disposés à une deuxième distance axiale (Q) l'un de l'autre, la première distance axiale (q) étant inférieure à la deuxième distance axiale (Q).

12. Unité à bague collectrice selon l'une des revendications 9 à 11, la brosse (3.1, 3.2, 3.3) ayant une section transversale circulaire.

13. Unité à bague collectrice selon l'une des revendications 9 à 12, la brosse (3.1, 3.2., 3.3) étant en un matériau contenant du métal.
